# EUROPEAN PATENT APPLICATION

(11) **EP 3 486 807 A1**
(43) Date of publication of application: **22.05.2019**
(21) Application number: 18206360.2
(22) Date of filing: 14.11.2018
(51) Int. Cl.: G06F 17/20, G10L 15/24

(54) **METHODS, SYSTEMS AND APPARATUSES FOR IMPROVING SPEECH RECOGNITION USING TOUCH-BASED PREDICTIVE MODELING**

(30) Priority: 16.11.2017 US 201715815252
(71) Applicant: HONEYWELL INTERNATIONAL INC., New Jersey 07950 (US)
(72) Inventor: LETSU-DAKE, Emmanuel, Morris Plains, NJ 07950 (US); MOGHADAM FALAHI, Mohammad, Morris Plains, NJ 07950 (US)
(74) Representative: Houghton, Mark Phillip

(57) **Abstract**

Methods, systems and apparatuses are provided for speech recognition using a touch prediction model for a multi-modal system which include: pre-training the touch prediction model of the multi-model system to enable a prediction of probable commands of a subsequent user based on a trained model wherein the trained model is trained using a history of a set of touch actions by plurality of users; sending at least parameter data associated with a current page displayed to a particular user at an instance of interaction with the multi-model system by the particular user; receiving inputs from a group including: previous touch actions, system parameters and contextual parameters of the plurality of users; and using a set of options associated with the top n-most probable commands upon receipt of speech commands by the user by using a vocabulary associated with a reduced set of probable commands for recognition.

## Description

### TECHNICAL FIELD

The present invention generally relates to speech recognition and more particularly to a methods, systems, and apparatuses for speech recognition combined with inputs from disparate systems for achieving high speech recognition accuracy results without needing speaker dependent training models in ascertaining communications occurring during an often-changing external environment such as within an aircraft cockpit.

### BACKGROUND

Speech recognition in the cockpit can eliminate manual steps required to execute a command thereby decreasing workload and allowing a pilot to focus on other or more critical flight tasks, which increases both the efficiency and safety of the aircraft flight operation. In addition, speech recognition can be especially helpful in the cockpit when calling up infrequently used commands or menus, for which the crew might otherwise spend significant time searching and diverting attention. Further, voice recognition when used in the cockpit can enable a pilot to conduct flight operations in a similar manner as to those conducted with a heads up display because a pilot may view outside the cockpit and not divert his or her visual attention to the aircraft instrumental panel to activate the controls. In addition, voice recognition may allow for control of avionic control systems. This is particularly relevant because with increases in air traffic there are more aircrafts departing and arriving at airports and a need for pilots to look outside the cockpit to perform tasks related to avoiding other aircrafts, which occur during the departing and arrivals flight phases. In addition, with the use of advanced vision systems (AVS) such as synthetic vision and combined vision systems on heads up displays, such AVS require pilots to be in a heads up position for viewing.

Speech recognition technologies have been integrated into such areas but the success of the integration of these speech recognition technologies has been limited because requirements of speech recognition technologies for success are dependent on achieving a high accuracy in speech recognition as well as overcoming a plethora of unique challenges such as dialect, accents and aviation terminology posed in the aircraft cockpit environment. Also, a high level of recognition accuracy is required because of the safety-critical nature of flight deck operations.

Some of the current speech recognition systems use speaker dependent speech engines which depend on knowledge of a particular speaker's voice characteristics to achieve the required accuracy levels. These kind of speech engines must be trained for the particular user before the speech engine can recognize the speech of the user. However, these speaker dependent systems are not always feasible for use in a cockpit environment because of the ever-changing nature of the conditions and multiple individuals communicating with the pilots and vice versa. For example, there is the potential involvement of any number of different personnel voicing communications from ground control at any given instance in the communication stream sent to the pilot. Conversely, multiple pilots may also fly a particular aircraft at different times using the cockpit systems to communicate with individuals external to the cockpit. In addition, the lack of availability of sufficient time for developing appropriate training models for each particular speaker communicating with the pilot further accentuates the problem of achieving the needed high accuracy results.

Current voice recognition systems also use noise cancelation to try to achieve high accuracy in speech recognition in a noisy environment such as the aircraft cockpit; and to reduce the environmental variations, which cause noise in the speech signal. However, the use of noise cancelation is relatively ineffective to combat the high levels of engine, wind and other environmental noise distortions as well as variations in the level themselves that occur during a flight in the aircraft cockpit.

Hence, it is desirable to address these inadequacies raised in speech recognition in the communications that occur with the pilot and the ground controllers as well as other internal and external communications with multi modal speech recognition methods, systems and apparatuses to improve the overall speech recognition engine performance and that allows for fusing of data from disparate independent systems such as touch based displays or systems to improve the accuracy of the recognized speech communications and to enable voice command of avionic operations and control systems. The present disclosure addresses at least this need.

### BRIEF SUMMARY

Methods, Systems and Apparatuses are provided for improving the accuracy of speech recognition using touch prediction when voicing commands in an aircraft cockpit during aircraft operation.

In an exemplary embodiment, a method for speech recognition using a touch prediction model for a multi-modal system is provided, the method includes: pre-training the touch prediction model of the multi-model system to enable a prediction of probable commands of a subsequent user based on a trained model wherein the trained model is trained using a history of a set of touch actions by plurality of users; sending at least parameter data associated with a current page displayed to a particular user at an instance of interaction with the multi-modal system by the particular user; receiving inputs from a group including: previous touch actions, system parameters and contextual parameters of the plurality of users to predict the probable commands which include at least a subsequent command or a menu selection by the particular user wherein a set of top n-most probable commands of the probable commands are sent to a speech recognition engine, in accordance, with a value which is configurable to a value of a number n of the top n-most probable commands; and using a set of options associated with the top n-most probable commands upon receipt of speech commands by the user by using a vocabulary associated with a reduced set of probable commands related to the top n-most probable commands for recognition in order to increase a confidence level of recognition by the speech recognition engine wherein a higher order of magnitude of reduction for the set of top n-most commands results in turn in a higher confidence level of recognition.

In another exemplary embodiment, a multi-modal system for speech recognition using a touch prediction model is provided, which includes: a pre-trained touch prediction module for modeling touch prediction models to enable a prediction of probable commands of a subsequent user based on a trained model wherein the trained model is trained using a history of a set of touch actions by plurality of users; an input to the pre-trained touch prediction module for receiving at least parameter data associated with a current page displayed to a particular user at an instance of interaction with the multi-modal system by the particular user; an input to the pre-trained touch prediction module from a group including: previous touch actions, system parameters and contextual parameters of the plurality of users to predict the probable commands which include at least of a subsequent command or a menu selection by the particular user wherein a set of top n-most probable commands of the probable commands are sent to a speech recognition engine, in accordance, with a value which is configurable to a value of a number n of the top n-most probable commands; and a set of options associated with the top n-most probable commands upon receipt of speech commands by the user by using a vocabulary associated with a reduced set of probable commands related to the top n-most probable commands for use in recognition in order to increase a confidence level of recognition by the speech recognition engine wherein a higher order of magnitude of reduction for the set of top n-most commands results in turn in a higher confidence level of recognition.

In yet another exemplary embodiment, an apparatus for multi-modal speech recognition using a touch prediction model, is provided which includes: a pre-trained touch prediction module for modeling touch prediction models to enable a prediction of probable commands of a subsequent user based on a trained model wherein the trained model is trained using a history of a set of touch actions by plurality of users; an input to the pre-trained touch prediction module for receiving at least parameter data associated with a current page displayed to a particular user at an instance of interaction with the multi-modal system by the particular user; and an input to the pre-trained touch prediction module from a group including: previous touch actions, system parameters and contextual parameters of the plurality of users to predict the probable commands which include at least of a subsequent command or a menu selection by the particular user wherein a set of top n-most probable commands of the probable commands are sent to a speech recognition engine, in accordance, with a value which is configurable to a value of a number n of the top n-most probable commands.

In various embodiments, methods are provided for receiving a voice observation as input for an activation of the multimodal system of speech recognition wherein the multimodal system includes at least an input of the voice observation which is combined with pre-trained touch model of touch actions for the speech recognition; for acquiring a speech signal from the voice observation for speech recognition wherein the speech signal includes at least one of the speech command or a speech menu selection; for applying the set of options of feature extraction, and lexical and language modeling for identifying one or more of the speech command or a speech menu selection; for using the options of feature extraction and lexical and language modeling with the vocabulary associated with the reduced set of probable commands related to the top n-most probable commands to generate at least a recognized command or menu selection wherein the reduced set of probable commands enables higher accuracy in the speech recognition engine; and for instructing applications, controls systems, and operations in accordance with the recognized command or menu selection from the speech recognition engine.

In various embodiments, the systems are provided for an input for receiving a voice observation for an activation of the multimodal system of speech recognition wherein the multimodal system includes at least an input of the voice observation which is combined with pre-trained touch model of touch actions for the speech recognition; for a signal acquisition module for acquiring a speech signal from the voice observation for speech recognition wherein the speech signal includes at least one of the speech command or a speech menu selection; for an option of feature extraction of an option of lexical modeling and an option of language modeling, each for use in identifying one or more of the speech command or a speech menu selection; for a combination of the option of the feature extraction, the option of lexical modeling and the option of language modeling for use with the vocabulary associated with the reduced set of probable commands related to the top n-most probable commands to generate at least a recognized command or menu selection wherein the reduced set of probable commands enables higher accuracy in the speech recognition of the speech recognition engine and for an instruction for instructing applications, controls systems, and operations in accordance with the recognized command or menu selection.

In various embodiments, the apparatus provide for an input for receiving a voice observation for an activation of the multimodal system of speech recognition wherein the multimodal system includes at least an input of the voice observation which is combined with pre-trained touch model of touch actions for the speech recognition; a signal acquisition module for acquiring a speech signal from the voice observation for speech recognition wherein the speech signal includes at least one of the speech command or a speech menu selection; an option of feature extraction; an option of lexical modeling; and an option of language modeling, each for use in recognizing one or more of the speech command or a speech menu selection; and an instruction for instructing applications, controls systems, and operations in accordance with the recognized command or menu selection.

This summary is provided to describe select concepts in a simplified form that are further described in the Detailed Description.

This summary is not intended to identify key or essential features of the claimed subject matter, nor is it intended to be used as an aid in determining the scope of the claimed subject matter.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram of a system suitable for use in an aircraft in accordance with the exemplary embodiments described herein;
FIG. 2 is a block diagram of a system suitable for use in an aircraft in accordance with the exemplary embodiments described herein;
FIG. 3 is a speech recognition system of an exemplary method suitable for use with the system of FIG. 1 in accordance with the exemplary embodiments
FIG. 4 is a speech recognition system using touch prediction in accordance with the exemplary embodiments described herein;
FIG. 5 is a snapshot of a display with a matrix of touch elements in accordance with exemplary embodiments described herein; and
FIG. 6 is a flowchart of processes of fusing touch prediction data in the speech recognition system in accordance with exemplary embodiments described herein.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All the embodiments described herein are exemplary embodiments provided to enable persons skilled in the art to make or use the invention and not to limit the scope of the invention that is defined by the claims. Furthermore, there is no intention to be bound by any expressed or implied theory presented in the preceding technical field, background, brief summary, or the following detailed description.

While the exemplary embodiments described herein refer to speech recognition methods and systems on an aircraft, the invention may also be applied to other vehicle display systems such as displays used by off-site controllers, e.g., ground controllers or even other vehicular display and alerting systems like automobiles etc... However, it is contemplated that other different modal annunciations rather than touch including but not restricted to differentially colored or formatted visualization of the data presented, annunciation through lights, vibratory annunciations, haptic feedback and gestures etc. may be used and fused in the speech engine of the speech recognition presented.

Speech recognition can improve the ease of aircraft communications which are especially important because with the present increases of air traffic there are an associated increase in communications between the aircrafts, and between the aircrafts and ground controllers to ensure smooth operations, efficiency and safety of the air traffic in the air and on the ground. Since, the communications, particularly Air Traffic Control ("ATC") communications involve verbal communications between pilots and ground controllers, there is an emphasis placed on the quality of these verbal communications to ensure safety and efficiency. Speech recognition can improve the quality of the correct recognition of the verbal communications received by both parties.

Further, the increasing automation of information places a greater burden on the flight crew to obtain and interpret information pertinent to an aircraft. For example, the Next Generation Air Transportation System (NextGen) overhaul of the United States airspace system and the companion Single European Sky ATM Research (SESAR) overhaul of the European airspace system creates various trajectory-based mechanisms to improve air traffic management on these continents. That is, electronic instrumentation displays continue to advance in sophistication, achieving increasingly higher levels of information density and, consequently, presenting a greater amount of visual information to be perceived and understood by the operator, e.g., the pilot and adding to burdens incurred by the pilot. Speech recognition can lessen pilot workloads and counter the additional burdens placed on the pilot from the increases in automation.

In an exemplary example, electronic flight bag (EFB) solutions, which include electronic display systems for the flight deck or cabin crew member use, are gaining in popularity. For example, EFB devices can display a variety of aviation data or perform basic calculations (e.g., performance data, fuel calculations, takeoff and landing computations, etc.). In the past, some of these functions had to be manually entered using paper references or were based on data provided to the flight crew by an airline's flight dispatch function. Hence, EFB solutions when displayed also add to burdens of interpreting displayed information placed on flight crews.

With these increased burdens there may be a resultant increase in human errors due to a number of factors which include: non-coordinated cockpit system messages, poor external visibility, fatigue, lack of position awareness, misunderstood ATC clearances, multiple or conflicting ATC clearances, or inadvertent flight deck distractions leading to accidents.

Speech recognition tools may be used to counter such affects. For example, speech recognition can be used in conjunction with ATC responsibilities or avionic control systems for a host of applications such as air traffic controllers' work load measurement, speech interface for air traffic control terminals, automated analysis and transcription of ATC voice communications, replacing the "pseudo-pilot" in air traffic control simulation and training by "automated pilot" which can recognize and understand the controller's speech using speech recognition modules. Further, speech recognition can be used with applications to aid the pilot in flight operations with systems that include but are not limited to the cockpit display systems, Flight Management Systems, Enhanced Ground Proximity Warning System (EGPWS), Traffic Collision Avoidance System TCAS, Weather or RADAR Systems, EFB devices, etc.

Speech recognition is the process of converting a speech signal into a sequence of words. Speech recognition may also be referred to as Automatic Speech Recognition ("ASR") or Speech-to-Text ("STT"). The use of speech recognition has become ubiquitous and is used in many aspects of a daily life. For example, use may be found in automotive systems or environment in which users are busy with their hands, home automation (e.g., voice command recognition systems), speech-to-text processing (e.g., word processors or emails), and personal assistants on mobile phones (e.g., APPLE SIRI® on iOS, MICROSOFT CORTANA® on WINDOW®'s Phone, GOOGLE® NOW on ANDROID®).

The pervasive use of touch screens for personal electronic devices and complex systems such as the flight deck systems provides an opportunity for improving speech recognition performance using touch interaction prediction.

Certain terminologies are used with a regard to the various embodiments of the present disclosure. For example, a display unit is an aircraft onboard device that provides a user interface for a particular avionic system onboard an aircraft, which may include a Flight Management System (FMS), Communications Management Function (CMF), assigned spacing goal (ASG), achieve by point (ABP), automatic dependent surveillance broadcast (ADS-B), flight information services-broadcast (FIS-B) or other avionics systems. The flight crew members may use the FMS interface to perform tasks associated with flight planning, navigation, guidance, and performance. A processor may be coupled to the display unit to format communications of data transmissions originating from one or more avionics systems onboard an aircraft, and which are directed to a cockpit display onboard the aircraft.

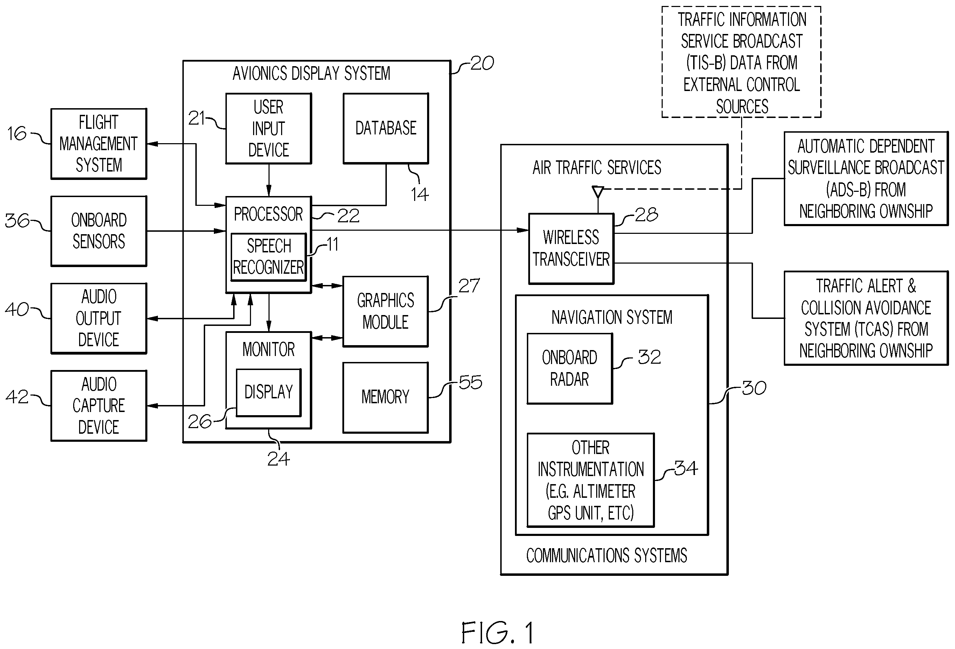

FIG. 1 depicts a block diagram of an exemplary aircraft navigation and control system, in accordance with the disclosed embodiments. FIG. 1 is a functional block diagram of an avionics display system **20** in accordance with an exemplary embodiment. The avionics display system **20** includes at least one processor **22** and at least one monitor **24,** which is operatively coupled to processor **22.** During the operation of the avionics display system **20,** the processor **22** drives the graphics module **27** which, in conjunction with processor **22,** drives the monitor **24** to produce a graphics display **26** that visually provides the pilot and flight crew with information pertaining to the aircraft and to neighboring aircraft within a predetermined vicinity of the host aircraft. The processor **22** includes a speech recognizer **11** and may be used to provide the functions of the speech recognizer **11.** The speech recognizer **11** may convert received speech transmissions to text as well as perform appending of text and concatenating of text messages with system messages. The speech recognizer **11** may perform natural language processing ("NLP") of received audio or voice transmission as well as monitoring of broadcasts and transmissions for conversion to text and further processing by the processor **22.** The speech recognizer **11** may perform or assist the processor **22** in performing functions related to contextual interpretations and aggregations of the received broadcasted and transmitted voice transmissions. These transmissions may include transmissions as well as broadcasts from the ATC and aeronautical operation control ("AOC") to the aircraft or other aircrafts. The graphics display **26** may include visual representations of one or more flight characteristics pertaining to a neighboring aircraft, as described more fully below. The processor **22** may generate a graphics display **26** in a two-dimensional format (e.g., as a lateral or vertical profile map display) or in a hybrid format (e.g., in a picture-in-picture or split screen arrangement) and may be incorporated into all units capable of displaying TCAS data; e.g. the primary flight display, the multi-function display, and the interactive navigation display. The processor **22** may generate aural and audio messages to an audio output device **40** that provides the pilot and flight crew with information pertaining to the aircraft and to neighboring aircraft within a predetermined vicinity of the host aircraft. An audio capture device **42** may also be included connected into the processor **22.** This audio capture device **42** may capture aural alerts from other systems of the aircraft or from pilot communications for processing by the processor **22.**

The processor **22** may include, or be associated with, any suitable number of individual microprocessors, flight control computers, navigational equipment, memories, power supplies, storage devices, interface cards, and other standard components known in the art. In this respect, the processor **22** may include or cooperate with any number of software programs (e.g., avionics display programs) or instructions designed to carry out the various methods, process tasks, calculations, and control/display functions described below, for example, processor **22** may be included within a Flight Management Computer (FMC) of the type commonly deployed within a Flight Management System (FMS). The processor 22 may carry out functions associated with parsing, transcribing, aggregating and appending aural and text messages received by various inputs to the aircraft or from internal systems of the aircraft. The processor **22** with the speech recognizer **11** may include applications and solutions to perform natural language processing (NLP) of inputs of aural alerts to convert the aural alerts to text alerts. The conversion may include aural alerts consistent in structure with the message alert for aggregating together with the message alert to form a concatenated message alert type. The NLP may be applied with context based attributes based on applications of the processor **22** with the speech recognizer **11** to determine a context of the aural alert by matching with a set of context attributes prior derived for the particular aircraft and stored locally in memory of the processor **22** or memory **55.**

The image-generating devices suitable for use as monitor **24** include various analog (e.g., cathode ray tube) and digital (e.g., liquid crystal, active matrix, plasma, etc.) display devices. In certain embodiments, monitor **24** may assume the form of a Head-Down Display (HDD) or a Head-Up Display (HUD) included within an aircraft's Electronic Flight Instrument System (EFIS). The monitor **24** may be disposed at various locations throughout the cockpit. For example, the monitor **24** may include a primary flight display (PFD) and reside at a central location within the pilot's primary field-of-view. Alternatively, the monitor **24** may include a secondary flight deck display, such as an Engine Instrument and Crew Advisory System (EICAS) display, mounted at a location for convenient observation by the aircraft crew but that generally resides outside of the pilot's primary field-of-view. In still further embodiments, monitor **24** may be worn by one or more members of the flight crew.

The processor **22** includes one or more inputs operatively coupled to one or more air traffic data sources. During operation of the avionics display system **20,** the air traffic data sources continually provide the processor **22** with navigational data pertaining to any neighboring aircraft. In the exemplary embodiment illustrated in FIG. 1, the air traffic data sources include a wireless transceiver **28** and a navigation system **30,** which are operatively coupled to first and second inputs of processor **22,** respectively.

The navigation system **30** includes an on-board radar **32** and various other on-board instrumentation **34** such as a radio altimeter, a barometric altimeter, a global positioning system (GPS) unit, and the like. In a preferred embodiment, navigation system **30** may be included within a FMS; and on-board radar **32** may be included within a Terrain Awareness and Warning System (TAWS), such as an Enhanced Ground Proximity Warning System (EGPWS).

In some embodiments, graphic displays **26** may provide an output from the on-board radar **32** of the aircraft. For example, graphic displays **26** may provide a top-down view, a horizontal view, or any other view of a weather condition, an object and/or a particular terrain detected by the on-board radar **32** of the aircraft. The views of a weather condition may include monochrome or color graphical representations of the weather. A graphical representation of a weather condition may include an indication of altitude (or altitudinal coordinates) of those objects or the altitude relative to the aircraft.

The avionics display system **20** provides the display information to the pilot or flight crew in a highly intuitive manner. For this exemplary embodiment, the avionics display system **20** includes the processor **22** connected to a database **14,** a flight management system **16,** a navigation system **30,** a graphics module **27,** and a graphics display **26.** Further, it is contemplated that while the avionics display system **20** appears in FIG. 1 to be arranged as an integrated system, the present disclosure is not intended to be so limited and may also include an arrangement whereby one or more of processer(s) **22,** database **14,** flight management system **16,** navigation system **30,** graphics module **27,** and graphics display **26** is a separate component or a subcomponent of another system located either onboard or external to an aircraft.

Also, for example, avionics display system **20** may be arranged as an integrated system (e.g., aircraft display system, Primary Flight Display system, etc.) or a subsystem of a more comprehensive aircraft system (e.g., flight management system, navigation and control system, target aiming and control system, collision alert and/or avoidance system, weather avoidance system, etc.). Furthermore, the present disclosure is not limited to aircraft displays, and may also be implemented for other types of vehicles' electronic displays (such as, for example, spacecraft navigation displays, ship navigation displays, submarine navigation displays, train navigation displays, motor vehicle navigation displays, etc.).

The database **14** may also include, for example, a terrain database, which may include the locations and elevations of natural terrain obstacles such as mountains or other elevated ground areas, and also the locations and elevations of man-made obstacles such as radio antenna towers, buildings, bridges, etc. As another example, airport and runway location data, and other types of high priority target data (e.g., locations of incoming traffic to avoid, constructed waypoints, obstacles in the aircraft's flight path, etc.) may be retrieved and/or received by processer **22** from a suitable source of such data, such as, for example, an onboard flight management system database (e.g., a component of flight management system **16**), an onboard navigation database (e.g., a component of navigation system **30**), on-board sensors **36** or the on-board radar **32,** or an external database (e.g., via a data communication up-link).

The aircraft may be any aviation vehicle that uses a flight management system **16** as a primary user interface for flight crew interaction with the avionics display system **20** onboard the aircraft. The aircraft may be implemented as an airplane, helicopter, spacecraft, hovercraft, or the like. The one or more avionics systems may include a Flight Management System (FMS), aircraft interface device (AID) or the like. Data obtained from the one or more avionics systems may include, without limitation: flight plan data, aircraft state data, weather data, brake system data, fuel and weights data, runway analysis data, aircraft performance data, or the like.

The memory **55** can be external to and operatively coupled to processing unit or, instead, in integrated into processer **22.** In one embodiment, a processor and memory of the processer **22** reside in an Application Specific Integrated Circuit ("ASIC"). Memory **55** may store data, such as various software or firmware, supporting operation of processer **22** and other components included in avionics display system **20,** such as graphics system, sensor system, and the source of aircraft state data. Additionally, the memory **55** may store one or more onboard databases or be connected to the database **14.** Onboard the aircraft, the database **14** can include a navigational database, a terrain database, a weather database, a historical trend database, and/or a runway database, such as an Enhanced Ground Proximity Warning System ("EGPWS") runway database.

The processer **22** and a graphics module **27** cooperate to display, render, or otherwise convey one or more graphical representations, synthetic displays, graphical icons, visual symbology, or images associated with operation of avionics display system **20** on graphics display **26.** An embodiment of an avionics display system **20** may utilize existing graphics processing techniques and technologies in conjunction with graphics module **27.** Graphics module **27** is suitably configured to support well-known graphics technologies and display techniques including (i) synthetic vision, (ii) enhanced vision, (iii) combined vision, and (iv) compressed attitude.

Graphics display **26** may include any image-generating device or devices capable of producing one or more navigation displays of the types described herein. As a point of emphasis, the term "display device" encompasses display devices (image-generating devices) fixed to the aircraft (A/C) cockpit, as well as Electronic Flight Bags ("EFBs") and other portable display devices that may be carried by a pilot into the cockpit of an A/C and perform the below-described functions. For example, the graphics display **26** may implement one or more of a multi-function display (MFD), a three-dimensional MFD, a primary flight display (PFD), a synthetic vision system (SVS) display, a vertical situation display (VSD), a horizontal situation indicator (HSI), a traffic awareness and avoidance system (TAAS) display, a three-dimensional TAAS display, just to name a few. Moreover, the display may be implemented with multiple types of a graphic display **26,** each of which may implement one or more of these different, non-limiting displays. No matter the number or particular type of display that is used to implement the graphic display **26,** it was noted above that the graphic display **26** is responsive to the image rendering display commands it receives to render various images. The images that the graphic display **26** renders will depend, for example, on the type of display being implemented.

The graphic display **26** may also consider input data received via user input device **21** when performing the above-described functions. In this regard, user input device can include any number and type of input devices suitable for receiving pilot input, which may be distributed throughout the cockpit of an aircraft (A/C) and possibly included in other systems or subsystems. In one embodiment, user input interface assumes the form of or includes the alphanumeric keypad of an FMS.

The processer **22** is configured, upon receipt of data and information, to continuously process the information to identify the predictive tracking angle, roll, pitch, and yaw for the aircraft A/C, and to generate a symbolic form representative thereof. The symbolic form is an aircraft orientation cue to be displayed on the graphic display **26,** and the dimensions of the symbolic form vary predictably to indicate, respectively, predictive tracking angle, roll, and yaw.

Within other on-board instrumentation **34,** each sensor may include one or more sensor technologies, devices, instruments (such as on-board radar, radar altimeter, a global positioning system (GPS)), and software, sufficient for detecting and providing aircraft A/C status data (including speed, location, position, remaining fuel, faults, conditions, and detected weather and temperature).

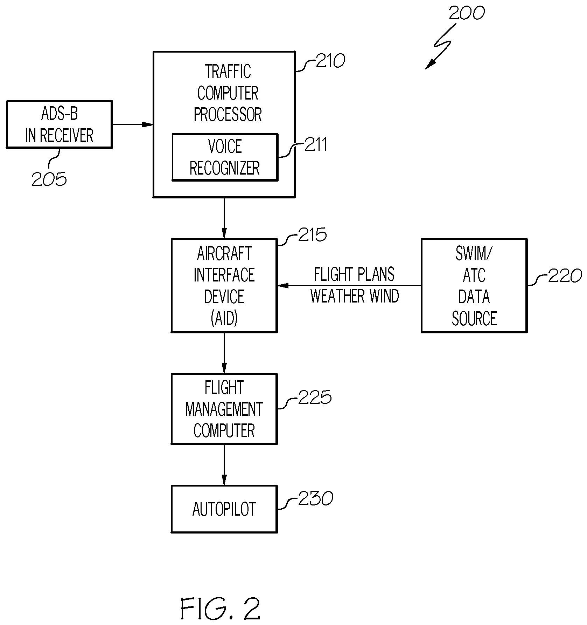

FIG. 2 depicts a block diagram of an exemplary aircraft navigation and control system for use with speech recognition, in accordance with the disclosed embodiments. FIG. 2 includes an automatic dependent surveillance broadcast (ADS-B) receiver **205** which is an integral component of NextGen national airspace strategy were the aircraft receives flight information services-broadcast (FIS-B) and traffic information services broadcast (TIS-B) data and other ADS-B data such as direct communication from nearby aircrafts at a traffic computer **210.** The traffic computer **210** receives the ADS-B in and generates the target aircraft state parameters to an aircraft interface device (AID) **215.** The traffic computer **210** may also include processors of a voice recognizer **211** for speech recognition and may provide voice recognize functions to convert voice transmissions to text. In addition, the voice recognizer **211** may include solutions for semantic contextual interpretations of the voice transmissions and for appending and aggregating to other text messages or flight data. For example, functions and solutions of the voice recognizer **211** together with functions and solutions of the traffic computer **210** may be used to match aural and text messages, concatenate aural and text messages, and append or aggregate in similar or same structures pairs of aural transformed messages with text messages. Also, the AID **215** receives the flight data, weather, wind as well as inputs received from a System Wide Information Management/Air Traffic Control (SWIM/ATC) data source **220.** The aircraft interface device (AID) **215** is coupled to the FMC **225** and sends speed data to the autopilot **230.**

The ADS-B receiver **205** is considered an air traffic data source in that ADS-B receiver **205** receives navigational data from external control sources and relays this data to traffic computer **210.** For example, ADS-B receiver **205** may receive Traffic Information Services-Broadcast (TIS-B) data from external control sources. In a preferred embodiment, the ADS-B receiver **205** receives Traffic Collision Avoidance System (TCAS) data, and may receive Automatic Dependent Surveillance-Broadcast (ADS-B) data from neighboring aircraft. This data, and other such external source data, is formatted to include air traffic information, which may be utilized to determine a neighboring aircraft's current position and the existence and location of air traffic.

In addition, the TCAS is an airborne system that detects and tracks aircraft near a host aircraft. TCAS includes a processor, antennas, a traffic display (e.g. an LMAP display, a VSD, etc.), and means for controlling the aviation display system, such as is shown in FIG. 1. The processor and antennas detect and track other aircraft by interrogating their transponders, and tracking these potential intruders on a display. The TCAS processor analyzes the transponder replies to determined range, bearing and relative altitude. If the system determines that a potential hazard exists, it issues visual and aural advisories to the crew. The visual advisory takes the form of symbols on the one or more traffic displays; e.g. the LMAP display and VSD.

Also, it is contemplated that in an Internet of Things environment many of the participating systems may be connected to each other and additional systems connected or interconnected could be easily added or removed.

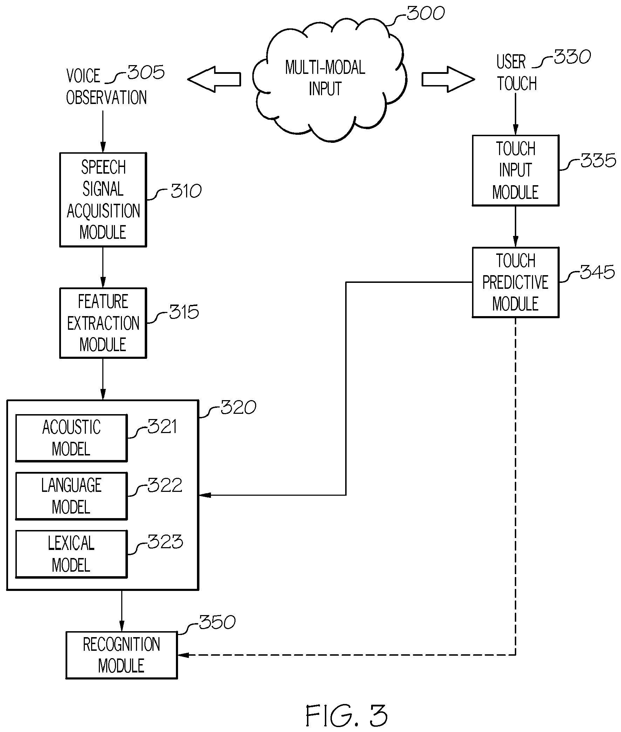

Fig. 3 illustrates a speech recognition system in accordance with an exemplary embodiment. The speech recognition system **300** includes multimodal inputs of a voice input **305** and a touch input **330** which are combined in the processing pipeline. The voice processing pipeline includes: a speech signal acquisition module **310,** a feature extraction module **315,** acoustic/lexical/language modeling modules **320** and a signal acquisition module **325.** The touch input processing pipeline includes: tasks related to touch input to the touch input module **335** for generating a touch predictive N-list by the touch prediction N-list and to predict a sub-list of the N-list using touch prediction modeling generated by the touch predictive module **345.** Tasks related to recognition performed by the recognition module **350** are based on the acoustic/lexical/language modeling of the acoustic/lexical/language modeling modules **320** and touch prediction task modeling of the touch predictive module **345.** The tasks related to recognition by the recognition module **350** use a multimodal input based on voice observations at the voice input **305** and the touch input **330** where a feature vector sequence of X = XI, X2, ...Xn is identified using tasks derived by the feature extraction module **315.** Based on this vector, the corresponding word sequence W = W1, W2...Wn that has the maximum following probability P(W | X), expressed using Bayes theorem in as follows: W = argmax w P(W | X) = argmax w P(W)P(X | W) P(X) are found. When the user makes a voice input from the acoustic observation, the voice recognition system is activated and the current state of the system is triggered as an input to the touch predictive module **345.** Using the current state of the system as inputs which include the models inputs of: the application page, the function, the phase of flight and the immediate past command or sequence/history of commands (voice and/or touch), the touch predictive module **345** outputs a set of likely words with the probability of likelihood of the words.

Based on a preset criterion (e.g. minimum probability or top n outputs) of the touch prediction N-list module **340** a number outputs are selected as the most probable words or commands to be recognized. The selected set of words are used by the recognition module **350** as the likely voice input **305** received for the feature extraction module **315** and for recognition as the words spoken of the voice input **305.** The touch predictive module **345** reduces the database for recognition in combination with the acoustic model module **321,** the language model module **322** and the lexical model module **323** of the acoustic/lexical/language modeling modules **320.** The touch predictive module **345** reduces the word sequence to a limited most probable set of VI, V2, ...Vn where n<m of the total set. Hence, the prediction input is reduced by a reducing of the word set thereby increasing the probability of finding the corresponding word sequences. In the instances of a multimodal application, historical commands from either source (voice or touch) may continuously serve as historical data for the touch predictive model.

The tasks of the feature extraction module **315** convert the speech signal into a feature vector. The tasks at the language model of the language model module **322** detect connections between the words in a sentences with the help of tasks of lexical model of the lexical model module **323.** Speech recognition systems use an n-gram language model different from the n-most probable commands to provide context for distinguishing words and phrases that sound similar. The use of a language model of the language model module **322** not only makes speech recognition more accurate but also helps to reduce the search space for recognition. The tasks of the lexical model module **323** provide pronunciations of words in a given language. The tasks of the lexical model module **323** links the acoustic model module **321** which models a representation with the word sequence which is output by the speech recognizer at the recognition module **350.** The recognition module **350** takes input from the feature extraction module **315** and then uses acoustic models, language models and lexical models with the predictive modeling to recognize which words were spoken.

With the use of the touch predictive module **345** the size of the vocabulary is reduced by limiting the size to the output of the predictive model generated. The size of vocabulary affects the complexity, performance and the accuracy of the speech recognition system **300.** For example, the vocabularies may be classified into five classes as follows: a small vocabulary of tens of words, a medium vocabulary of hundreds of words, a large vocabulary of thousands of words, a very-large vocabulary of tens of thousands of words, and an unlimited vocabulary. With the a smaller vocabulary which results from the multimodal input and modeling, the speech recognition system **300** is easier to implement with less latency given the reduced data set that needs to be processed and allows for a higher accuracy. Further, in the ATC domain, the vocabularies used in communication between controllers and pilots follows International Civil Aviation Organization (ICAO) Standard Phraseology. The entire vocabulary of words (excluding names of specific places and call signs) is about a few hundred words and therefore can be considered a medium sized vocabulary. Hence, reducing the vocabulary size of a medium size vocabulary for the speech recognition system **300** can aid operations in the context of air traffic control and aircraft avionic controls.

In addition, speaker independence may be required, in instances, of the speech recognition system **300** in ATC recognition. That is, although Air Traffic Control Command Recognition (ATCCR) applications require only one controller at the same time, there are situations where multiple controllers are required in the operational environment. Hence, reduction of the vocabulary and subsequent files sizes used in the processing pipeline will play a role with speaker independence and latency processing times by the various modules in a multi-modal environment. For example, in the context of simulation and training, the speech recognition system would need the capabilities to recognize many air traffic controllers without the requirement to re-train or re-configure the system. Thus, speaker independent systems are best suited for these applications but will need higher recognition accuracy of such systems than is customarily the case. Therefore, multi-modal processing may be used to meet the need for the higher accuracy in the speaker independent speech recognition.

For example, in an exemplary embodiment, the multi-modal aspects of the speech recognition system **300** enable bringing together two disparate information sources as an effective means of reducing recognition uncertainty in speech recognition systems. In addition, by the use of a multi-modal system of input to the speech recognition system **300** a fusing together of disparate information from each input enables the performance and accuracy of the speech recognition engine to be increased. This is due because the speech recognition processing accuracy is affected, often significantly, by the size of the vocabulary used of possible recognize-able words, and a reduction in vocabulary size increases the recognition capabilities of the recognition module **350** by reducing words in the speech matching processes. Also, external factors to the speech engine of the speech recognition system **300** such as environmental noise and speaker accent pose challenges to the applications of the recognition module **350.** Also, when complex human-computer interfaces like a Flight Management System which has several user-selectable options per page are executed in conjunction with the voice recognition; a reduced accuracy in recognition has proven not to achieve a feasible solution.

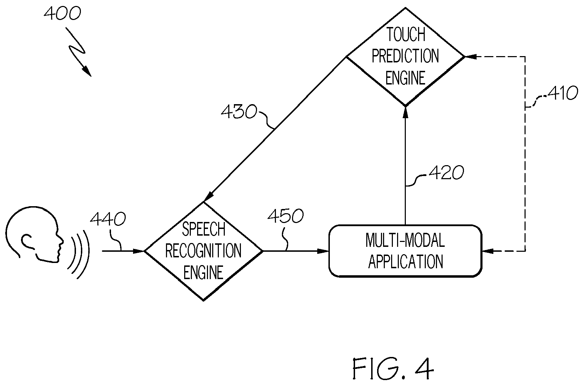

The speech recognition multi-modal process using touch prediction is illustrated in the flow diagram of FIG. 4. In FIG. 4 at **410,** the speech recognition system **400** assumes a pre-trained touch prediction model, which predicts the next user action based on a model trained using machine learning and historical data. That is, data of users from past touch selection are modeled for a particular context of the flight mode and accessible by the touch prediction engine for sending data to the multi-modal application. At **420,** an instance of interaction with a multi-modal system fusing data from the speech recognition engine and the touch prediction engine. The data from the touch prediction engine requires user input for a current page displayed on the device which generates the touch data as well as other relevant system input parameters which are both sent to the touch prediction engine for augmenting the touch model by the touch prediction engine. At **430,** using this information as inputs to the touch prediction engine, the touch prediction model will predict the next n-most probable (n=1, 2, 3, 4 ...) commands or menu selections by the user. The user, in this particular instance, is likely the pilot or member of the flight crew. At **440,** when the user or speaker annunciates a speech command when viewing the current page displayed on the display device. The speech recognition engine will then, accordingly, use a narrowed list or subset of options of n-most probable commands as the vocabulary of words for recognition by the speech recognition engine. Hence, as the vocabulary size is limited on the initial matching to a probable commands, the confidence of a correct match is raised as well as the recognition time to make the match. In other words, by reducing the vocabulary size the latency time for processing each of the words in the vocabulary to identify a match with the command is reduced thus the overall confidence level of the speech recognition of the utterance is raised. In instances, there may be higher orders of magnitude of reductions achieved by further reductions in the n top most commands. In addition, n top most commands may be reduced based on the probability of each command given a prior context. For example, in an exemplary embodiment, a round robin matching process may be limited to an N number of top most commands on a page out of a set of twenty commands. At **450,** recognition options such as the N number of top most commands may be executed by the multi-modal system. The intuition of the N-number model is that instead of computing the probability of a word given the entire corpus or historical usage, an approximation of the history can be achieved by just the last few cycles.

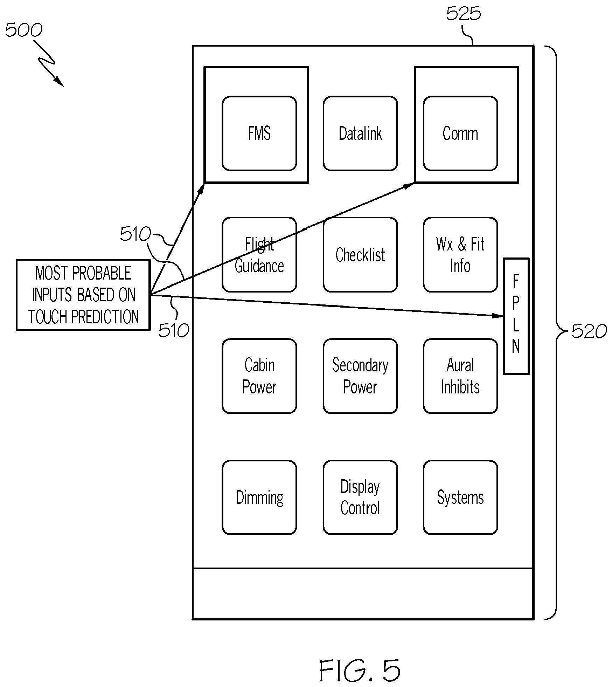

In FIG. 5 illustrates a snapshot of a touch screen display of a multi-functional system for generating the touch predictions in the multimodal speech recognition system according to an exemplary embodiment. The touch screen display **500** consists of a series of horizontal elements **525** and vertical elements **520** that are responsive to touch actuations. Both the horizontal and vertical elements form a matrix of 12 elements. Therefore, a user may select any one of the 12 elements during flight operations. Using algorithmic solutions related to predictive touch predictions as well as contextual flight data, predictive determinations can be determined of the likelihood of a user by touch actuating a subset of the elements or even particular elements. That is, the elements may be given an N list ranking of the likelihood of actuation by the user at a given time during the flight operation. In addition, a reduced subset of the most N probable inputs **510** may be determined based on historic data of touch predictions. Hence, by using predictive determinations, an algorithmic solution resolves or lessens ambiguities of touch sequences and subsequent touch actuations. This predictive determination of sequences of touch actuations may be referred to as disambiguation processes of the touch sequences. Hence, the disambiguation process may use historical touch data. Also, such a model may use several inputs including previous touch actions, system parameters and contextual parameters. The model is continuously improved (on-line/off-line) using user interaction data.

In an exemplary embodiment, a set of 12 possible options at any given time on the main menu of an aircraft touch screen digitizer may be reduced to 3-4 highly probable options based on touch prediction modeling. The highly probable options will then be used as vocabulary inputs to a speech recognition engine (if speech-enabled). The confidence of probability is increased by ∼5 fold of a 3-by-4 array of keys. Each key in the array of keys can be selected at every step in a sequence for completing a pilot task. There is therefore ambiguity as a pilot enters a sequence of keys because each selection could be any of the keys. With the touch predictive modeling, the ambiguity is reduced as particular patterns or sequences are modeled and predicted for various flight phases.

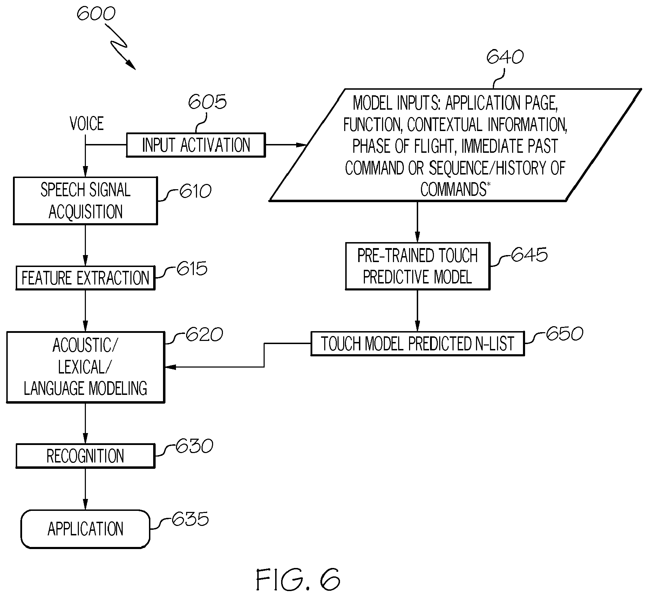

Fig. 6 is a flowchart of the speech recognition system in accordance with an exemplary embodiment. At input **605,** the input **605** is activated and the current state of the voice recognition system is triggered. Also, at the input **605,** speaker independence is relevant because there may be multiple pilots or crew voicing input to the speech recognition system. At **640,** the model inputs include the current states that include: the application page, function, contextual information, phase of flight or sequence/history of commands. At **645,** the pre-trained predictive model is executed to reduce the word set. That is, at **650,** the word set is reduced based on the touch model of the predicted N-list and then the flow proceeds to **620** for the acoustic/lexical/language modeling. At **610,** the speech signal is acquired using various microphones in the cockpit. At **615,** a feature extraction takes place where the feature extraction module converts the speech signal acquired at **610** into a feature vector. In addition, at **620,** the language modeling detects connections between the words in a sentences with the help of lexical models. In instances, the speech recognition system may use an n-gram language model to provide context for distinguishing words and phrases that sound similar. By the use of a language model the accuracy of the speech recognition is improved and also the search space is reduced for the recognition at **630.** An alternate language model may be represented by P(W) where P(W) represents a probability of word W being uttered. At **620,** the lexical model also known as a pronunciation dictionary provide pronunciations of words in a given language. The lexical model at **620** links the acoustic-level representation with the word sequence which is output by the speech recognizer at **630.**

At **630,** the recognition module takes input from the feature extraction module at **615** and then uses acoustic models, language models and lexical models at **620** to recognize which words were spoken. The selected set of words used at **630** by a speech recognition model of the recognition module are after the feature extraction **615.** The touch predictions model of **645** reduces the database for recognition in **630** by a combination with the language and lexical models of **620.** The touch prediction input reduces the word sequence to a limited most probable set of VI, V2, ...Vn where n<m of the total set. Hence, the prediction input is reduced by a reducing of the word set thereby increasing the probability of finding the corresponding word sequences. At **635,** a multimodal application of historical commands from either source (voice or touch) serves as historical data for the touch predictive model. Additionally, since the application at **635** is a multimodal application, irrespective of the original input of modality (e.g. voice or touch input) at **605,** the end command recognized by the recognition module at **630** is the same. For example voicing the an "open" command would lead to the same result as pressing the "open" button.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate the interchangeability of hardware and software, various illustrative components, blocks, modules, circuits, and steps have been described above generally in terms of their functionality.

Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a controller or processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for speech recognition using a touch prediction model for a multi-modal system, the method comprising:
pre-training the touch prediction model of the multi-model system to enable a prediction of probable commands of a subsequent user based on a trained model wherein the trained model is trained using a history of a set of touch actions by plurality of users;
sending at least parameter data associated with a current page displayed to a particular user at an instance of interaction with the multi-modal system by the particular user;
receiving inputs from a group comprising: previous touch actions, system parameters and contextual parameters of the plurality of users to predict the probable commands which comprise at least a subsequent command or a menu selection by the particular user wherein a set of top n-most probable commands of the probable commands are sent to a speech recognition engine, in accordance, with a value which is configurable to a value of a number n of the top n-most probable commands; and
using a set of options associated with the top n-most probable commands upon receipt of speech commands by the user by using a vocabulary associated with a reduced set of probable commands related to the top n-most probable commands for recognition in order to increase a confidence level of recognition by the speech recognition engine wherein a higher order of magnitude of reduction for the set of top n-most commands results in turn in a higher confidence level of recognition.

2. The method of claim 1, wherein n is set to n=3 or less for an optimum level of the confidence level of recognition.

3. The method of claim 1, further comprising:
receiving a voice observation as input for an activation of the multimodal system of speech recognition wherein the multimodal system comprises at least an input of the voice observation which is combined with pre-trained touch model of touch actions for the speech recognition.

4. The method of claim 3, further comprising:
acquiring a speech signal from the voice observation for speech recognition wherein the speech signal comprises at least one of the speech command or a speech menu selection.

5. The method of claim 1, further comprising:
applying the set of options of feature extraction, and lexical and language modeling for identifying one or more of the speech command or a speech menu selection.

6. The method of claim 5, further comprising:
using the options of feature extraction and lexical and language modeling with the vocabulary associated with the reduced set of probable commands related to the top n-most probable commands to generate at least a recognized command or menu selection wherein the reduced set of probable commands enables higher accuracy in the speech recognition engine.

7. The method of claim 6, further comprising:
instructing applications, controls systems, and operations in accordance with the recognized command or menu selection from the speech recognition engine.

8. A multi-modal system for speech recognition using a touch prediction model, comprising:
a pre-trained touch prediction module for modeling touch prediction models to enable a prediction of probable commands of a subsequent user based on a trained model wherein the trained model is trained using a history of a set of touch actions by plurality of users;
an input to the pre-trained touch prediction module for receiving at least parameter data associated with a current page displayed to a particular user at an instance of interaction with the multi-modal system by the particular user;
an input to the pre-trained touch prediction module from a group comprising: previous touch actions, system parameters and contextual parameters of the plurality of users to predict the probable commands which comprise at least of a subsequent command or a menu selection by the particular user wherein a set of top n-most probable commands of the probable commands are sent to a speech recognition engine, in accordance, with a value which is configurable to a value of a number n of the top n-most probable commands; and
a set of options associated with the top n-most probable commands upon receipt of speech commands by the user by using a vocabulary associated with a reduced set of probable commands related to the top n-most probable commands for use in recognition in order to increase a confidence level of recognition by the speech recognition engine wherein a higher order of magnitude of reduction for the set of top n-most commands results in turn in a higher confidence level of recognition.

9. The system of claim 8, wherein n is set to n=3 or less for an optimum level of the confidence level of recognition.

10. The system of claim 8, further comprising:
an input for receiving a voice observation for an activation of the multimodal system of speech recognition wherein the multimodal system comprises at least an input of the voice observation which is combined with pre-trained touch model of touch actions for the speech recognition.
